**Europäisches Patentamt**

**European Patent Office**

**Office européen des brevets**

(19)

(11) Veröffentlichungsnummer: **0 089 546**

**A2**

(12) # EUROPÄISCHE PATENTANMELDUNG

(21) Anmeldenummer: **83102239.7**

(22) Anmeldetag: **08.03.83**

(51) Int. Cl.³: **G 11 B 23/02**

(30) Priorität: **18.03.82 DE 3209889**

(43) Veröffentlichungstag der Anmeldung:
**28.09.83 Patentblatt 83/39**

(84) Benannte Vertragsstaaten:
**AT BE CH FR GB IT LI LU NL SE**

(71) Anmelder: **Miss, Siegfried**
**Im Springen 6**
**D-5990 Altena 8(DE)**

(72) Erfinder: **Miss, Siegfried**
**Im Springen 6**
**D-5990 Altena 8(DE)**

(74) Vertreter: **Geitz, Heinrich, Dr.-Ing.**
**Postfach 2708 Kaiserstrasse 156**
**D-7500 Karlsruhe 1(DE)**

(54) **Kassettenmagazin für Tonbandkassetten od. dgl., insbesondere zur Verwendung in Fahrzeugen.**

(57) Bei dem Kassettenmagazin sind in benachbarte, einseitig offene Aufnahmefächer für die Aufnahme jeweils einer Tonbandkassette od. dgl. eingeschobene Kassetten mittels stirnseitig an diesen angreifender, federnd abgestützter Verrastungsnocken gehalten, die im Bereich der beiden einander gegenüberliegenden Stirnseiten eines jeden Aufnahmefaches angeordnet sind und die jeweilige Kassette zwischen sich aufnehmen. Bei der Verwendung in Kraftfahrzeugen ist das Magazin in Überkopflage mit nach unten weisender Offenseite im Bereich des einen Fahrgastraum abschließenden Daches angebracht.

FIG.1

DR. ING. HEINRICH GEITZ PATENTANWALT 7500 KARLSRUHE 1, POSTFACH 2708

0089546

832028

Anmelder:  Siegfried Miss

Im Springen 6

D-5990 Altena 8

Kassettenmagazin für Tonbandkassetten od. dgl, insbesondere zur Verwendung in Fahrzeugen

=================================================================

Die Erfindung bezieht sich auf ein Kassettenmagazin
mit benachbarten, einseitig offenen Aufnahmefächern
für die Aufnahme jeweils einer Tonbandkassette od. dgl.,
bei dem im Bereich der beiden einander gegenüberliegenden Stirnseiten eines jeden Aufnahmefaches
je ein an einer Federzunge angeordneter, in das
Aufnahmefach hineinragender Verrastungsnocken vorgesehen ist und die beiden Verrastungsnocken eines
Aufnahmefachs an den beiden voneinander entfernten

832028

Stirnseiten einer in dieses Fach eingeschobenen
Kassette angreifen und letztere zwischen sich
aufnehmen. Insbesondere handelt es sich bei der
Erfindung um ein Kassettenmagazin zur Verwendung
in Fahrzeugen, wie Kraftfahrzeugen.

Kassettenmagazine dieser Art sind bekannt. Dabei
handelt es sich um beispielsweise einseitig offene
Behältnisse, deren Breite etwas größer als die
Länge und deren Tiefe etwas kleiner als die Breite
der zu magazinierenden Kassetten ist. An den seitlichen Wänden solcher Behältnisse sind, ähnlich
wie bei den Aufnahmekästen für Diapositive, in
einem der Stärke der Kassetten entsprechenden Abstand voneinander Führungsrippen angeordnet, die
den Aufnahmeraum der zumeist als Kunststoff-Formteile ausgebildeten Behältnisse in aneinander angrenzende Aufnahmefächer für jeweils eine Tonbandkassette unterteilen.

Bei einem in dem DE-Gebrauchsmuster 74 35 482 beschriebenen Kassettenmagazin sind anstelle seitlicher
Führungsrippen zwischen den einzelnen Aufnahmefächern jeweils zwei Zwischenwände vorgesehen,
aus denen Federzungen mit einseitiger Einspannung
ausgeschnitten sind. An den freien Enden dieser Federzungen befinden sich Zapfen, die nach Form und Lage
so ausgebildet und angeordnet sind, daß sie in die
Spulenkerne eingeschobener Kassetten eingreifen und
letztere dadurch in ihren Einschublagen sichern. Abgesehen davon, daß der Eingriff der genannten Zapfen
in die empfindlichen Spulenkerne der in den Aufnahme-

832028 — 3 — 0089546

fächern aufgenommenen Kassetten zu Beschädigungen der Spulenkerne führen kann, erscheint bei diesem vorbekannten Kassettenmagazin dessen kostspieliger und voluminöser Aufbau unbefriedigend, der sich aus dem Erfordernis von jeweils zwei Zwischenwänden zwischen zwei Aufnahmefächern ergibt.

Bei einer anderen, aus dem DE-Gebrauchsmuster 77 37 757 vorbekannten Kassettenbox sind im Bereich der Schmal- und Breitseiten eines Aufnahmefachs einseitig eingespannte Federzungen mit an den freien Zungenenden angeordneten Druckstücken vorgesehen, die an den Stirn- und Flachseiten einer eingeschobenen Kassette angreifen und letztere dadurch in dem Aufnahmefach festlegen. Auch diese Kassettenbox ist angesichts der an den Stirn- und Flachseiten der Aunfahmefächer angeordneten Federzungen mit Druckstücken kostspielig im Aufbau, vermag aber gleichwohl eine den Erfordernissen bei der Verwendung in Fahrzeugen hinreichend sichere Kassettenhaltung nicht zu vermitteln.

Demgemäß soll durch die Erfindung ein Kassettenmagazin der eingangs angegebenen Art insbesondere im Hinblick auf dessen Verwendung in Fahrzeugen verbessert werden. Diese Aufgabe ist bei dem Kassettenmagazin nach dem Oberbegriff des Patentanspruchs1 dadurch gelöst, daß die die Verrastungsnocken tragenden Federzungen an ihren beiden voneinander entfernten Enden eingespannte Federleisten sind, die sich zumindest über einen Teil der Tiefe der Aufnahmefächer erstrecken.

0089546

832028

Diese Ausbildung der Federleisten mit beidseitiger Endeinspannung gewährleistet eine Halterung der Kassetten in den Aufnahmefächern, die auch bei heftigen Erschütterungen, wie sie zum Beispiel im Betrieb eines Kraftfahrzeuges auf unebenen Fahrbahnen vorkommen können, selbst dann genügt, wenn das Kassettenmagazin in Überkopflage mit nach unten weisender Offenseite im Fahrgastraum eines Fahrzeugs angebracht ist, so daß die in die Aufnahmefächer eingeschobenen Kassetten hängend aufgenommen sind.

Eine besonders sichere Halterung eingeschobener Kassetten wird insbesondere dann erreicht, wenn gemäß der Ausgestaltung nach Patentanspruch 2 die Anordnung und Ausbildung der Verrastungsnocken an den Federleisten so getroffen ist, daß die Verrastungsnocken je einen stirnseitigen Vorsprung einer in ein Aufnahmefach eingeschobenen Kassette formschlüssig als Haltenocken hintergreifen.

Bei der Verwendung derartiger Kassettenmagazine in Kraftfahrzeugen mit Anbringung im Bereich beispielsweise eines Dachholms erweist sich die Ausgestaltung nach Patentanspruch 3 als vorteilhaft, wonach die Aufnahmefächer, die in Parallellage zueinander im Magazin angeordnet sind, sich in eine von der Lotrechten gegenüber einer von der Magazinoffenseite aufgespannten Ebene verschiedenen Winkel, der vorzugsweise etwa 60° betragen kann, in das Magazin hineinerstrecken. Diese geneigte Anordnung der Aufnahmefächer führt zu einer gestaffelten An-

832028

ordnung der eingeschobenen Kassetten und gewährleistet einerseits einen unproblematischen Einhandzugriff und andererseits gute Lesbarkeit von
Beschriftungen auf den Kassettenrückseiten.

Ein weiteres wichtiges Ausgestaltungsmerkmal
der Erfindung besteht darin, daß das Kassettenmagazin bei der Verwendung in Fahrzeugen in Überkopflage mit nach unten weisender Offenseite im
Bereich des einen Fahrgastraum abschließenden
Daches anzuordnen ist, wobei sich bei Kraftfahrzeugen die Anbringung an einem sich über einer
Frontscheibe erstreckenden Dachteil, etwa einem
quer zur Fahrtrichtung verlaufenden Dachholm, als
zweckmäßig erwiesen hat. Nach einem anderen Ausgestaltungsmerkmal kann die Erfindung durch die
Anbringung des Kassettenmagazins mittels einer
seinerseits im Dachbereich des Fahrzeugs befestigten
Halterung gekennzeichnet sein, wobei das Magazin
und die Halterung mit in der Montagelage einander
formschlüssig hintergreifenden Verrastungsnocken
versehen und fest, jedoch trennbar miteinander
verbunden sind.

Als zweckmäßig hat sich dabei erwiesen, wenn eine
nach oben weisende Magazinrückwand an einer im
Dachbereich des Fahrzeugs befestigten Konsole,
welche eine Halterung für das Magazin bildet, aufgenommen ist, wobei die zusammenwirkenden Verrastungsnocken, die an der Magazinrückwand und
der Konsole angeordnet sind, eine Steckverbindung
bilden. Angesichts der Tatsache, daß ein so in einem

0089546

832028

Fahrgastraum angeordnetes Kassettenmagazin angesichts seiner räumlichen Ausdehnung naturgemäß in den Fahrgastraum hineinragen muß und ein derartiger Einbau jedenfalls dann erhöhte Verletzungsgefahr für Insassen bilden kann, wenn das Magazin ortsfest verankert ist, besteht ein weiteres Ausgestaltungsmerkmal der Erfindung darin, daß die Verrastungsnocken der Konsole und der Magazinrückwand einander in der Montagelage hintergreifende Haltezungen sind, die sich in Fahrtrichtung des Fahrzeugs erstrecken und durch Verschieben des Magazins entgegen der Fahrtrichtung in ihre Verrastungslagen gelangen, hingegen infolge einer Relativbewegung des Magazins gegenüber der Konsole in Fahrtrichtung trennbar sind.

Eine derartige Anbringung des Kassettenmagazins im Fahrgastraum beispielsweise eines Kraftfahrzeugs genügt insofern den zu beachtenden Sicherheitserfordernissen, als bei etwaigen Unfällen keine ernsthaften Verletzungen auftreten können, weil durch einen etwaig mit dem Kopf auf das Magazin auftreffenden Insassen des Fahrzeugs das Magazin ohne beachtlichen Widerstand aus seiner Halterung herausgeschoben wird. Die Halterung des Magazins an der Konsole muß lediglich so bemessen sein, daß ein zufälliges Lösen unter der Wirkung der im normalen Fahrbetrieb auftretenden Einflüsse nicht stattfinden kann.

Anhand der beigefügten Zeichnung sollen nachstehend eine Ausführungsform des erfindungsgemäßen Kassettenmagazins sowie dessen Anringung im Dachbereich eines Kraftfahrzeugs erläutert werden. In schematischen Ansichten zeigen:

Fig. 1    ein in Überkopflage mit nach unten weisender Offenseite an einem nur angedeuteten Dachholm eines Kraftfahrzeugs befestigtes Kassettenmagazin in einer seitlichen Ansicht,

Fig. 2    das Kassettenmagazin und eine der Magazinbefestigung dienende Konsole in einer schematischen Explosivdarstellung,

Fig. 3    einen Querschnitt durch das Magazin gemäß der Schnittlinie III-III in Fig. 1 und

Fig. 4    das Magazin in einer durch die Schnittlinie IV-IV in Fig. 3 bestimmten Ansicht, zur Hälfte im Horizontalschnitt durch benachbarte Aufnahmefächer und zur Hälfte in einer Draufsicht auf die Magazinoffenseite.

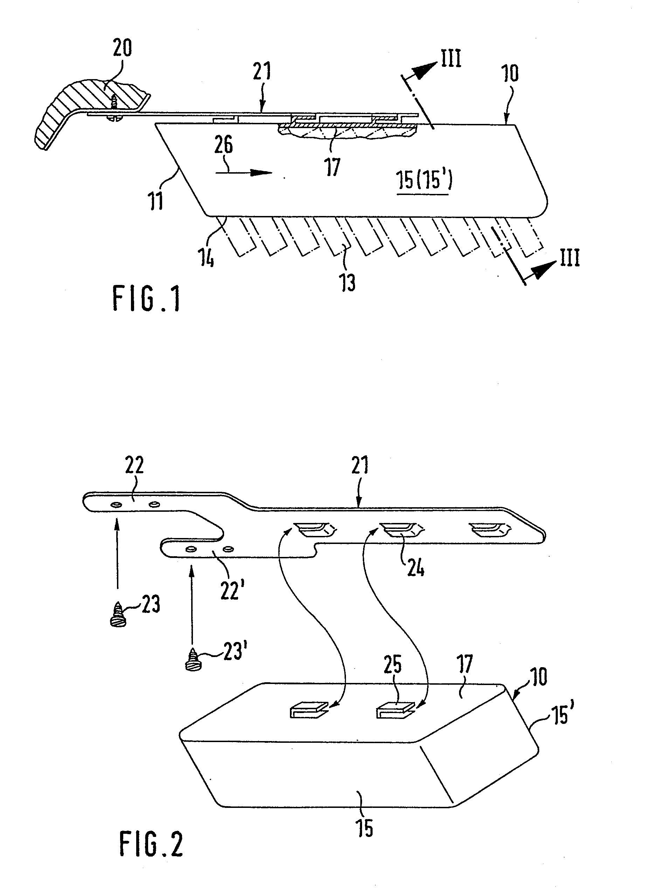

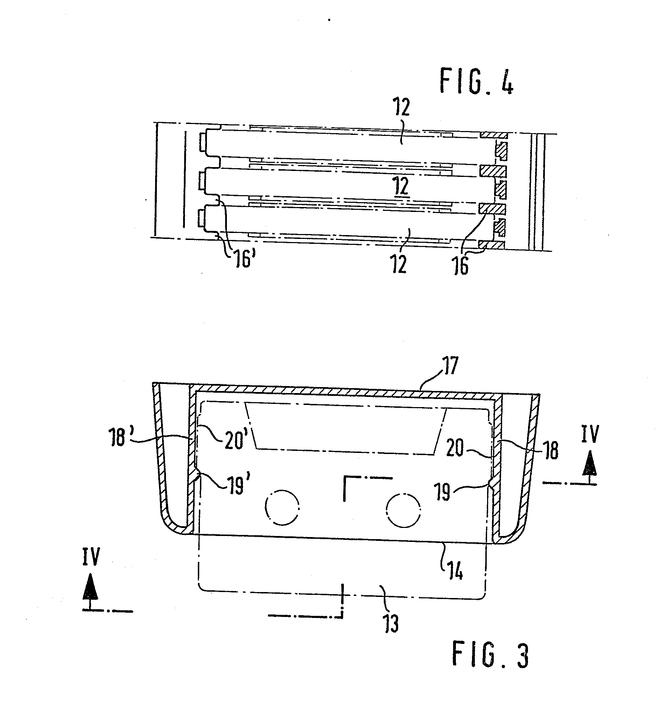

Bei dem in seiner Gesamtheit mit 10 bezeichneten Magazin handelt es sich um einen flachen, einseitig offenen Kasten 11 mit benachbarten Aufnahmefächern 12 für die Aufnahme je einer in den Fig. 1 und 3 in strichpunktierten Linien angedeuteten Tonbandkassetten 13. Die Aufnahme-

0089546

832028

fächer erstrecken sich von einer Offenseite 14 aus in das Magazin unter einem gegenüber der von der Offenseite aufgespannten Ebene verlaufenden Winkel von etwa 60° hinein und sind durch im Bereich der rechtwinklig zu der von der Offenseite aufgespannten Ebene verlaufenden Magazinseitenwänden 15, 15' angeordnete Führungsrippen 16, 16' begrenzt, die in einem etwa der Stärke einer Tonbandkassette 13 entsprechenden Abstand voneinander verlaufen. Der als Einschub- bzw. Entnahmeöffnung ausgebildeten Offenseite 14 gegenüberliegend ist das Kassettenmagazin durch eine rechtwinklig zu den mit den genannten Rippen versehenen Magazinseitenwänden verlaufende Rückwand 17 abgeschlossen. Zwischen den Führungsrippen 16, 16' im Bereich der Magazinseitenwände erstrecken sich an ihren beiden Enden eingespannte Federleisten 18, 18', die mit in die Aufnahmefächer hineinragenden Verrastungsnocken 19, 19' ausgerüstet sind. Diese Verrastungsnocken befinden sich in einem Abstand von der die Aufnahmefächer rückseitig begrenzenden Magazinrückwand 17, welcher der Länge der seitlich über die Kassettenstirnkanten hinausragenden Abschnitten 20, 20' entspricht, so daß diese Abschnitte bei in der Einschublage in den Aufnahmefächern aufgenommenen Kassetten von den Verrastungsnocken der Federleisten formschlüssig hintergriffen werden, wie Fig. 3 zeigt.

In der Einschublage sind mithin die Tonbandkassetten 13 in den Aufnahmefächern 12 zwischen den an den beiden voneinander entfernten Stirnseiten der Aufnahmefächer angeordneten, federnden Verrastungsnocken 19, 19' aufgenommen und dadurch im wesentlichen spielfrei gehalten, wobei angesichts der beidseitigen Einspannung der die Verrastungsnocken tragenden Federleisten 18, 18' eine sichere Halterung der Kassetten gewährleistet ist, die unbedenklich auch die aus Fig. 1 ersichtliche Überkopfanordnung des Magazins bei der Verwendung in Kraftfahrzeugen ermöglicht.

Bei der veranschaulichten Ausführungsform des erfindungsgemäßen Kassettenmagazins handelt es sich um einen als Kunststoff-Formteil ausgebildeten Kasten, der selbstverständlich auch in anderer Weise ausgestaltet sein könnte. Demgemäß kommt der zwar vorteilhaften, aber im Hinblick auf die Erfindung belanglosen doppelschaligen Ausbildung der Magazinseitenwände keine Bedeutung zu.

Die Verwendung des Kassettenmagazins 10 in einem Kraftfahrzeug veranschaulicht Fig. 1 in der Weise, daß an einem sich über einer nicht dargestellten Frontscheibe eines Fahrzeugs erstreckenden Dachholm 20 eine in ihrer Gesamtheit mit 21 bezeichnete Konsole befestigt ist. Im Anschlußbereich an den Dachholm 20 besitzt diese Konsole zwei parallel zueinander verlaufende Befestigungsschenkel 22, 22' und als Befestigungsmittel dienen selbstschneidende Blechschrauben 23, 23', die sich durch entsprechende Aufnahmebohrungen in den Befestigungsschenkeln hindurcherstrecken und in der aus Fig. 1 ersichtlichen

0089546

832028

Weise in das Material des Dachholms 20 eingeschnitten sind. Im übrigen erstreckt sich die laschenartig ausgebildete Konsole in Parallellage zu dem nicht weiter dargestellten Fahrzeugdach, welches oberseitig den ebenfalls nicht dargestellten Fahrgastraum abschließt. An der -in der Montagelage- Unterseite der Konsole sind zungenartige Verrastungskonturen 24 angeordnet, die sich mit ihren freien Enden in Fahrtrichtung erstrecken und um ein gewisses Maß aus der Konsolebene herausgeformt sind. Mit dazu passenden Verrastungskonturen 25 ist das Kassettenmagazin ausgerüstet, die sich auf der von den Aufnahmefächern entfernten Seite über die Rückwand 17 erheben und parallel zu dieser verlaufen. Die Verrastungskonturen 24, 25 der Konsole einerseits und der Magazinrückwand andererseits sind in der aus Fig. 1 ersichtlichen Weise dadurch in ihre einander hintergreifenden Verrastungslagen bringbar, daß sie deckungsgleich miteinander zum Ansatz gebracht werden und dann das Magazin in der durch den Pfeil 26 angedeuteten Richtung, also der Fahrtrichtung des Fahrzeugs entgegen, verschoben wird. Die Bemessung der Verrastungskonturen ist dabei so getroffen, daß sie bei allen in normalen Fahrbetrieb auftretenden Einflüssen infolge Klemmung in ihren einander hintergreifenden Verrastungslagen gehalten, jedoch bei einer Relativbewegung des Magazins entgegen der durch den Pfeil 26 angedeuteten Richtung trennbar sind.

Damit ist ein insbesondere in Kraftfahrzeugen verwendbares Kassettenmagazin geschaffen worden, das vornehmlich bei der Anbringung in Überkopflage im Dachbereich des Fahrzeugs, wie dies Fig. 1 zeigt,

0089546

832028

einerseits im Fahrgastraum nicht störend wirkt und
andererseits einen einfachen Zugriff bei der zumindest für den Führer eines Kraftfahrzeugs erforderlichen Einhandbedienung ermöglicht.

832028


Anmelder:    Siegfried Miss

                 Im Springen 6

                 D-5990 Altena 8


Patentansprüche

================


1.    Kassettenmagazin mit benachbarten, einseitig offenen Aufnahmefächern für die Aufnahme jeweils einer Tonbandkassette od. dgl., bei dem im Bereich der beiden einander gegenüberliegenden Stirnseiten eines jeden Aufnahmefaches je ein an einer Federzunge angeordneter, in das Aufnahmefach hineinragender Verrastungsnocken vorgesehen ist und die beiden Verrastungsnocken eines Aufnahmefachs an den beiden voneinander entfernten Stirnseiten einer in dieses Fach eingeschobenen Kassette angreifen und letztere zwischen sich aufnehmen, insbesondere zur Verwendung in Fahrzeugen, wie Kraftfahrzeugen,
dadurch gekennzeichnet,
daß die die Verrastungsnocken (19, 19') tragenden Federzungen an ihren beiden voneinander entfernten

832028

Enden eingespannte Federleisten (18, 18') sind, die sich zumindest über einen Teil der Tiefe der Aufnahmefächer (12) erstrecken.

2.  Kassettenmagazin nach Anspruch 1, gekennzeichnet durch die Anordnung und Ausbildung der Verrastungsnocken (19, 19') an den Federleisten (18, 18') als je einen stirnseitigen Vorsprung (20, 20') einer in ein Aufnahmefach (12) eingeschobenen Kassette (13) formschlüssig hintergreifende Haltenocken.

3.  Kassettenmagazin nach Anspruch 1 oder 2, dadurch gekennzeichnet, daß die Aufnahmefächer (12), die in Parallellage zueinander im Magazin angeordnet sind, sich in eine von der Lotrechten gegenüber einer von der Magazinoffenseite (14) aufgespannten Ebene verschiedenen Winkel, insbesondere unter einem Winkel von etwa 60°, in das Magazin hineinerstrecken.

4.  Kassettenmagazin nach einem der Ansprüche 1 bis 3, gekennzeichnet durch die Anbringung in Überkopflage mit nach unten weisender Offenseite (14) im Bereich des einen Fahrgastraum abschließenden Daches bei der Verwendung in Fahrzeugen.

5.  Kassettenmagazin nach Anspruch 4, gekennzeichnet durch die Anbringung an einem sich über einer Frontscheibe erstreckenden Dachteil, etwa einem quer zur Fahrtrichtung verlaufenden Dachholm (20) bei einem Kraftfahrzeug.

6. Kassettenmagazin nach Anspruch 4 oder 5, gekennzeichnet durch die Anbringung mittels einer seinerseits im Dachbereich des Fahrzeugs befestigten Halterung (21), wobei das Magazin und die Halterung mit in der Montagelage einander formschlüssig hintergreifenden Verrastungsnocken (24, 25) versehen und fest, jedoch trennbar miteinander verbunden sind.

7. Kassettenmagazin nach Anspruch 6, dadurch gekennzeichnet, daß eine nach oben weisende Magazinrückwand (17) an einer im Dachbereich des Fahrzeugs befestigten Konsole (21) als Halterung aufgenommen ist, wobei die zusammenwirkenden Verrastungsnocken (24, 25), die an der Magazinrückwand und der Konsole angeordnet sind, eine Steckverbindung bilden.

8. Kassettenmagazin nach Anspruch 7, dadurch gekennzeichnet, daß die Verrastungsnocken der Konsole (21) und der Magazinrückwand (17) einander in der Montagelage hintergreifende Haltezungen (24, 25) sind, die sich in Fahrtrichtung des Fahrzeugs erstrecken und durch Verschieben des Magazins entgegen der Fahrtrichtung in ihre Verrastungslagen gelangen, hingegen infolge einer Relativbewegung des Magazins gegenüber der Konsole in Fahrtrichtung trennbar sind.

FIG.1

FIG.2

FIG. 4

FIG. 3